# EUROPEAN PATENT APPLICATION

(11) **EP 1 653 533 A1**
(43) Date of publication of application: **03.05.2006**
(21) Application number: 05256602.3
(22) Date of filing: 25.10.2005
(51) Int. Cl.: H01M 4/24, H01M 4/42, H01M 6/06

(54) **Zinc-alkaline battery and methodology for the selection of some of its components**

(30) Priority: 26.10.2004 ES 200402570
(71) Applicant: CELAYA, EMPARANZA Y GALDOS S.A. (CEGASA), E-01013 Vitoria (Alava) (ES)
(72) Inventor: Alday Lesaga, Javier, 01013 Vitoria-Alava (ES)
(74) Representative: Boden, Keith McMurray

(57) **Abstract**

An electrochemical element comprising an alkaline electrolyte and an anode containing a zinc powder, with no mercury or cadmium having been added during its production and its mercury content being less than 0.1 ppm and its cadmium content being less that 5 ppm, wherein the electrochemical element has a value in a specific expansion test which is higher than 25%, and a gas value of less than 2 ml, after discharge and after 7 days' storage at 60 °C under specific discharge conditions, for a battery with LR6 format.

## Description

### FIELD OF THE INVENTION

The present invention relates to electrochemical elements, such as batteries, in particular electrochemical elements comprising an oxide, such as MnO₂, an alkaline electrolyte and a metal which dissolves in ionic form in the electrolyte. In this configuration, electrons are released, thus leading to the reduction of the aforementioned oxide. A very common example of these elements is that which consists of EMD (Electrolytic Manganese Dioxide), a solution of potassium hydroxide as the electrolyte, and zinc powder or micro-alloyed zinc.

### PRIOR STATE OF THE ART

Zinc powder must have certain characteristics in order to be able to be used in alkaline batteries.

One of the most important characteristics is that the zinc must comply with local and International regulations concerning the content of certain undesirable elements. The components most commonly cited as undesirable metals are mercury and cadmium, and consequently it is very widely agreed that there should be the smallest quantity possible of these toxic elements in the zinc powder. However, there are limitations, since the zinc powder is produced from materials which are available commercially, and therefore the extensively applied practice is not to add any amount of these elements deliberately to the zinc powder during its production.

### The following are two typical examples of these regulations:

Firstly, Eco-labelling of primary batteries as specified in www.svanen.nu/DocEng/001e.pdf. Paragraph 4 of this document specifies: The metal content of the battery may not exceed the limit values specified below :

| Metal | Content |
|---|---|
| Mercury | <= 0.1 ppm |
| Cadmium | <= 1.0 ppm |
| Lead | <= 10 ppm |

Secondly, the environmental programme as specified in:
www.dep.state.ct.us/wst/mercury/saterestr7.pdf. Data sheet - Instruction concerning mercury and reduction of the mercury content. Sales restrictions for products with added mercury. What is the proposal for restriction of sales of products with added mercury?

The following list illustrates the types of product with added mercury and the limits permitted:
➢ Since 1^{st} July 2004, products produced with added mercury: 1 g in the product
➢ Since 1^{st} July 2004, products formulated with added mercury: 250 ppm in the product
➢ From 1^{st} July 2006, products produced with added mercury: 100 mg in the product
➢ From 1^{st} July 2006, products formulated with added mercury: 50 ppm in the product

What is considered to constitute a product with added mercury? According to the C.G.S. (Connecticut General Statutes), chapter 446m, Sec. 22^{a}-613, a product with added mercury is defined as a product, chemical product or component of a product, which contains mercury or a mercury compound which is added intentionally for any purpose. The products with added mercury include both products which are produced with added mercury and those which are formulated with added mercury.

These two examples show clearly the limits of the content of mercury and cadmium in the batteries according to the literature. It is therefore deduced that zinc powders may only be used in batteries if there is no mercury or cadmium added during the production process.

However, it must be remembered that the content of cadmium in the zinc depends on the refining process. There are two processes which are used for the refining of zinc. The first process is distillation, in which the zinc is separated as zinc vapour from the impurities in the raw material by fractionated distillation. The other process is electrolytic refining.

As the result, the two processes give a different cadmium content in the final zinc product. In general, distilled zinc contains more cadmium than electrolytic zinc. Consequently, the cadmium content in zinc powders may differ by a few parts per million, including in the case when no cadmium is added during the process for production of the zinc powders, depending on whether the original material was distilled zinc or electrolytic zinc. As a general limit, it can be concluded that the cadmium content in zinc powders which are produced from distilled zinc will be less than 5 parts per million, and the cadmium content in zinc powders which are produced from electrolytic zinc will be less than 3 parts per million.

Another more important characteristic is that the powder may not create gas in the interior of the component in quantities which give rise to undue deformation or even destruction of the component.

Different methods are used to determine the formation of gas by zinc powders, which include methods used in the interior of the component, and methods used outside the component or without the component.

The methods used in the interior of the component are those which give rise to deformation or to the development of gas, when a real battery or component is produced and tested. Since the component must have a long life, the test periods (trials) are normally shortened by accelerating the formation of gas, for example, by performing tests at high temperatures.

The following is a practical example. Components for a battery with LR6 format are produced in a specific form, and then stored for a certain time, such as 7 days at 70 °C. The time and temperature represent only one example, with 21 days and 60 °C being another example.

After the storage period, testing is performed to determine the deformation or bulging of the components, or of the quantity of gas which has formed inside the components. For this purpose, the elements are opened in water or oil, and the volume of gas which escapes is measured.

Additional information about the behaviour of the zinc powder within the component can be obtained by discharging the component partially and storing it. This method is known as "formation of gas after partial discharge", which is abbreviated to as the "PD-gas" test.

There are other tests which are performed outside the component and determine the quantity of gas generated by the zinc powder dispersed in the electrolyte. These tests have many different procedures and forms.

One such test is performed by introducing some predetermined quantities of zinc powder and electrolyte for batteries into a predetermined glass flask. This determines the volume of gas generated by the zinc powder in a predetermined period, for example, 24 h, and at a certain temperature, for example, 71.5 °C.

Another of the tests performed outside the component consists of preparing a zinc powder gel of the type used in the components, that is, a mixture of zinc powder and an expanding agent and electrolyte, and determining the expansion caused by the formation of gas from this gel.

US-A-5,464,709, "Alkaline cells that are substantially free of mercury" by Getz *et al*, 7^{th} November 1995, describes another test which is performed outside the component, and which attempts to simulate the effect of the discharge of gas formed by the zinc powder by means of electrolysis.

The test is carried out in four successive steps:
a) an electrolyte is prepared by dissolving KOH in H₂O at a predetermined concentration, and dissolving a predetermined quantity of ZnO in the electrolyte.
b) a mass of zinc powder is prepared by mixing zinc powder with a thickening agent and the aforementioned electrolyte.
c) electrolysis is performed with a device in which the two electrodes, one made of zinc and the other of brass, are submerged in electrolyte and the mass of zinc powder covers the zinc electrode.
d) the expansion of the mass is determined after the latter has been removed from the electrolytic bath, by introducing the mass into a graduated tube and storing at a predetermined temperature for a predetermined period.

It is clear that all of the aforementioned tests provide their own specific results. Some, such as the test performed outside the components or batteries, do not reveal the true behaviour of the zinc powders inside the components. Others, such as the "PD-gas" test, do provide information on the true behaviour of the zinc powders inside the components. It will be appreciated that the best way of differentiating a good powder from one which has poor performance consists of using the "PD-gas" test. However, if it is wished to avoid assembly of components, it is possible to use other tests which are capable of simulating the performance of the powders.

It has been found that it is advantageous to perform more than one of the above-described tests, as well as a chemical analysis, before using a specific type of powder or powder from a specific production batch in the production of alkaline batteries. It will be appreciated that account has to be taken of many more parameters, since the generation of gas is only one aspect, and the powders have to have good performance in all types of discharges.

US-A-5,464,709 and the steps recently taken by the proprietors of this patent have created the impression that the expansion test is a universal test for the selection of zinc powder, namely, that powders with less than 25 % expansion make it possible to produce good batteries, and powders with an expansion of more than 25 % are not suitable for alkaline batteries. According to US-A-5,464,709, the limit of 25 % is the upper limit, and only when the expansion of gas is less than 15 % or even 10 % are good batteries obtained.

### EXPLANATION AND ADVANTAGES OF THE INVENTION

Unexpectedly, it has been discovered that it is possible to produce excellent batteries using powders which have an expansion of more that 25 % in the expansion test as set out in US-A-5,464,709, and which surpass the results of other tests such as the "PD-gas" test.

This invention claims the use in alkaline components of zinc powders which have an expansion of the mass, according to the test specified in US-A-5,454,709, of more than 25 %, with a sufficiently low level of post-discharge gas.

In the following examples, use is made of the test of expansion of the mass, as described in US-A-5,464,709.

### The test consists of the following steps:

A gel is produced from a zinc powder consisting of 63 % by weight of zinc powder, 0.5 % by weight of a thickening agent (Carbopol™ 940 is an appropriate example), and 36.5 % by weight of an aqueous electrolyte of potassium hydroxide (aqueous solution of 37 % by weight of KOH) which contains 42.5 g/l of zinc oxide.

The electrolysis of the zinc powder gel takes place in an electrolytic cell, such as that described vaguely in the above-mentioned patent. The electrolytic cell has a positive electrode in the form of a disc with a top made from a brass cartridge strip situated inside a flat-bottomed 500 ml polypropylene laboratory beaker, which is cut off at approximately 250 ml, and thus provides a cell in the form of a cup. 100 g of zinc powder gel is deposited in the cup, and on top of the positive electrode. A paper separator disc with the same diameter as the cup is placed on the zinc powder gel. A paper separator strip is placed on the wall of the cup in order to protect the tongue of the positive electrode from the negative electrode. The negative electrode is a piece of zinc strip, which is cut in the form of a 3" disc with a tongue of 0.5" x 1.5". The disc has some apertures which permit escape of the hydrogen gas which is generated during the electrolysis. The negative electrode is secured to the tongue which is situated on the edge of the cup, just in front of the tongue to which the positive electrode is secured. Space is left between the separator and the negative electrode in order to permit the growth of the deposit of zinc during electrolysis. Sufficient electrolyte is added to the cup to cover the negative electrode. A piece of plastic strip, such as SARAN™ wrapping, is placed loose on the cell.

The electrolytic cell is connected to a 10A, 20V DC supply source. The electrolytic cell is subjected to electrolysis at 2.88 A for 161 minutes. The current and voltage are measured with resistance of 1 Ω. A recorder records the voltage in the electrolytic cell at the beginning and end of the electrolysis. The voltage in the electrolytic cell should be approximately between 0.7 and 1.2 V. A low voltage may indicate the presence of a short-circuit in the cell. If there is a short-circuit, the cell must be disconnected, and any deposit or dendrites of zinc on the zinc electrode must be eliminated. The cell can then be re-connected, and the test continued.

When the electrolysis is completed, four graduated 10 ml polypropylene tubes are filled up to a level of 6 ml. Each tube must contain approximately 17 g of zinc powder gel. Another four 10 ml tubes are filled with the same quantity of fresh zinc powder gel which has not been electrolysed. Approximately 1 ml of low-density, high vapour pressure oil is added, which is both insoluble and inert in relation to the electrolyte, onto the gel in each of the tubes. The level of both the gel and the oil are recorded. The density of the gel can be calculated. This is approximately 2.7 ± 0.15 g/ml.

The tubes are placed in an oven preheated to 71 °C, and are kept at this temperature for 24 hours. The tubes are then removed and cooled for about 30 minutes. The levels of the gel and oil are then read. The level of expansion of the get is calculated as the difference between the levels, divided by the initial level.

For the examples according to the embodiments of this invention, the method for determining the expansion was improved slightly as compared to the disclosed method, and is as follows.
a) The tests were carried out in a concentric arrangement. The electrolytic cell consists of a polyethylene cup 10 cm in diameter and 5 cm deep. This cup contains a strip made of zinc or nickel-plated steel, such as the types used for the tubes of the primary alkaline batteries, which are 20 cm x 5 cm x 0.1 cm in size. This zinc or nickel-plated steel strip is used as the negative electrode. It is known that this nickel-plated steel strip does not contribute towards the formation of gas in the cell in the same way that it does in the case of electrochemical elements. In the centre of the electrolytic cell is a second polyethylene cup 6 cm in diameter and 5 cm deep. In the wall of this cup there are six apertures with a size of 3 cm x 1 cm, at 0.5 cm from the base. A 5.7 cm x 20 cm piece of separator paper is placed inside this cup. The base of this cup is covered with the zinc powder gel to be tested. The positive electrode used is the typical anodic pin of primary alkaline batteries connected to an insulated copper cable.
b) The electrolytic cell is filled with 160 g of electrolyte.
c) When the positive electrode is covered with zinc gel in the centre of the cup, and there is a concentric electrode around the zinc electrode, the gas generated at the negative electrode can escape easily. During electrolysis, the zinc is deposited on the negative electrode. The deposits increase in the direction of the positive electrode. If the deposits were allowed to remain they would short-circuit the electrolytic cell. However, the concentric arrangement makes it possible to observe this increase in the deposits far better than in other systems, and to eliminate the deposits by scraping the negative electrode with a plastic tool. There is no danger at all that the zinc deposits will drop onto the zinc gel and give rise to excessive expansion.
d) It is very important for the positive electrode to be covered by zinc gel at all times, such that it does not dissolve and thus influence the results of the expansion test.
e) 100 g of the mass tested is placed in a 50:1 ml graduated tube, in order to avoid heterogeneousness and to facilitate the reading of the levels. The graduated tubes are made of a material such as "Nalgene" or the like, for example, Azlon HI, so as to facilitate the descent of the gel in the tube, thus providing uniform filling of the space necessary. If gas were to escape from the tubes, which is more probable with the tubes used in these examples than with those described in US-A-5,464,709, the average expansion would be less than the true value. Since the object is to look for larger expansions, this is not a disadvantage of the method. The concept of this invention is after all to obtain greater expansion, at the same time as excellent performance of the battery.
f) The electrolyte used in the electrolysis is removed carefully from the zinc powder gel and is homogenised by agitation, before being introduced into the graduated tubes. During the electrolysis, some parts of the zinc powder gel acquire a hard lumpy structure. These lumps cannot be introduced into small graduated tubes.
g) The tubes are placed in a thermostat at 25 °C for 0.5 h, in order to be able to perform the initial reading of the levels.
h) The tubes are then placed in the thermostat at 70 °C for 24 h. After an hour, the levels at 70 °C are read and recorded.
i) After 24 h, the tubes are placed in the thermostat at 25 °C once more for the final reading of the levels.
j) Six electrolytic cells are connected in series, in order to ensure an identical flow of current in comparative tests.

In a comparative test carried out according to the test of US-A-5,464,709, no differences are encountered in the level of expansion.

In order to be able to compare any zinc powders, the powders are subjected to the "PD-gas" test. This test is carried out as follows:

The "PD-gas" ("Gas in Battery") test comprises measuring the quantity of pre-discharge and post-discharge gas as generated by components or elements after specific conditions of storage and discharge. The test is sensitive to all of the components contained in alkaline batteries, as well as to the impurities in the zinc powder, separator paper, electrolyte (of the mass and for soaking), MnO₂ rings, pin, top, etc.

### DESCRIPTION OF A PREFERRED EMBODIMENT

All the following examples refer to zinc powder produced without the intentional addition of mercury or cadmium.

The typical chemical analysis of these powders is: Hg: < 0.01 ppm, Cd: < 1.5 ppm.

A mass is prepared with zinc powder, and subsequently a defined quantity, for example, 6 g, of this mass is manually injected into batteries with LR6 format. When the batteries are assembled, they are subjected to continuous discharge with constant resistance, and a variable discharge time. The batteries are then stored in controlled time and temperature conditions, in this embodiment 60 °C for 7 days.

The "PD-gas" test is a measurement concerning the development of the gas. Thus, all the reagents have to have a predefined weight or volume.

| | |
|---|---|
| Zn powder: | 280.5 g |
| Electrolyte with 1.43 g/l density: | 117.1 g |
| Carbopol: | 2 g |

Continuous discharge at 2.2 Ω (constant resistance)
3 LR6 batteries 0 min discharge and 7 days' storage at 60 °C
3 LR6 batteries 15 min discharge and 7 days' storage at 60 °C
3 LR6 batteries 60 min discharge and 7 days' storage at 60 °C
3 LR6 batteries 120 min discharge and 7 days' storage at 60 °C

For each batch of zinc powder, a mass is prepared and injected manually into the batteries, which are subsequently closed. The batteries are then subjected to controlled continuous discharges at a constant resistance of 2.2 Ω. The above paragraph indicates both the composition of the mass and the discharge times). After having discharged each battery for the appropriate time, the batteries are stored at 60 °C for 7 days.

After the storage period, the gas generated is measured in the interior of the batteries as follows.

Each battery is submerged in a water bath. A funnel of an inverted burette is then placed just above the submerged battery. The nipple part of the tube is then perforated by means of a needle, such that the gas contained in the battery is released and gathered in the burette. The burette has a graduated scale, such that it is possible to determine the gas generated in the interior of the battery for a predetermined discharge.

The "PD-gas" test can be considered a unique relative measurement only if all of the parameters, such as the storage temperature, concentrations of KOH and ZnO, discharge times and resistances, remain constant.

In order to be able to perform the tests according to this invention, the preparation of the electrolyte has to be well defined.

For the expansion tests according to US-A-5,464,709, the electrolyte is prepared according to the defined specification, which comprises the following steps:
a) A 2 l Schott Duran glass is filled with 1000 ml of distilled water.
b) 1000 g of Panreac Quimica S.A. 85 % potassium hydroxide flakes are added slowly, whilst being agitated with a Teflon magnetic agitator.
c) The solution is cooled to 20 °C and its density is measured.
d) In accordance with the density specifications given, for example, by "http://www.chemie.de/HyperNews/get/forums/chemstarter-2002/4134/1/1.html", the solution is diluted with distilled water until a concentration by weight of 37 % KOH is obtained.
e) 42.5 g of ZnO is added for each litre of solution, and dissolved by means of agitation and heat.
f) The loss of volume caused by the heat is corrected, and the density is checked once more.

This electrolyte is stored in the same bottles in which the KOH was contained, until used in the tests to determine the expansion of the electrolytic gel.

In the "PD-gas" tests according to this invention, the electrolyte is prepared in the same manner as it is industrially.

That is, 90 % KOH flakes are dissolved in demineralised water. ZnO is added and dissolved. The final electrolyte has a density of 1.43 ± 0.01 g/ml and contains 44 g/l of ZnO.

The following examples are provided in order to describe the invention, without limiting its scope.

1^{st} example: The starting point is a zinc powder known as BI. This powder contains Bi and In as micro-alloy elements, as indicated by the reference BI.

The analysis is carried out by atomic absorption and ICP, see Table 1.

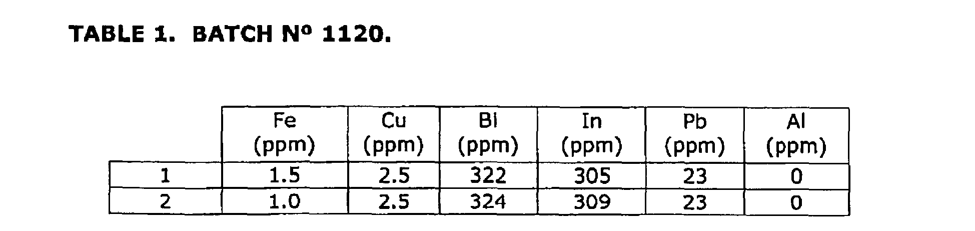

When this powder was subjected to the expansion test according to US-A-5,464,709, as previously described, the results in Table 2 were obtained.

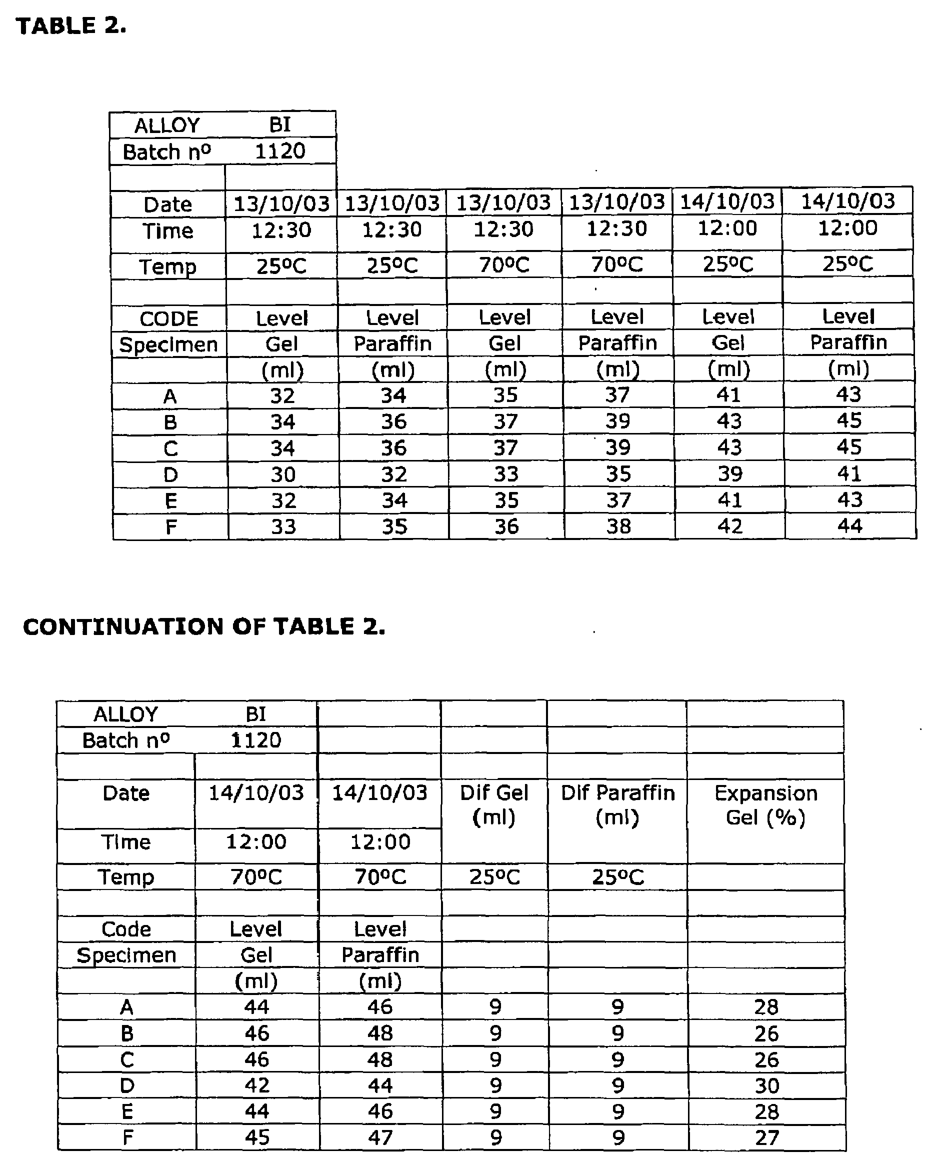

When the "PD-gas" test was carried out on a battery with LR6 format with the zinc powder BI (P1120), the results in Table 3 were obtained.

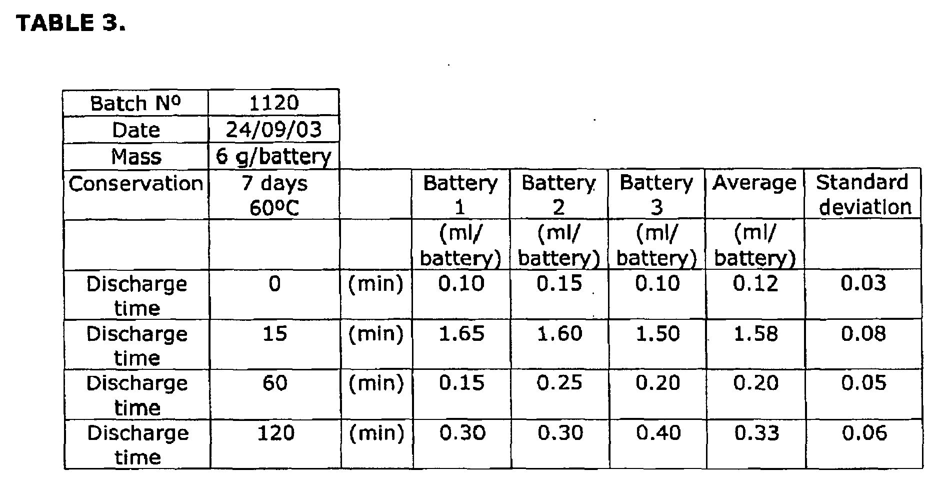

2nd example: The starting point is a zinc powder known as ABI, which indicates that it contains Al, Bi and In as micro-alloy elements.

Table 4 shows the results of the mean analysis of the ICP of this powder.

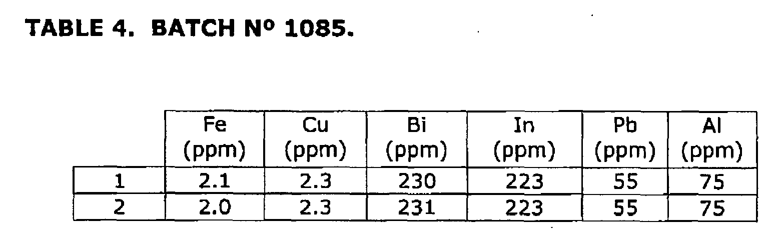

When this powder was subjected to the expansion test according to US-A-5,464,709, as previously described, the results in Table 5 were obtained, where the time at 70 °C was 3 days.

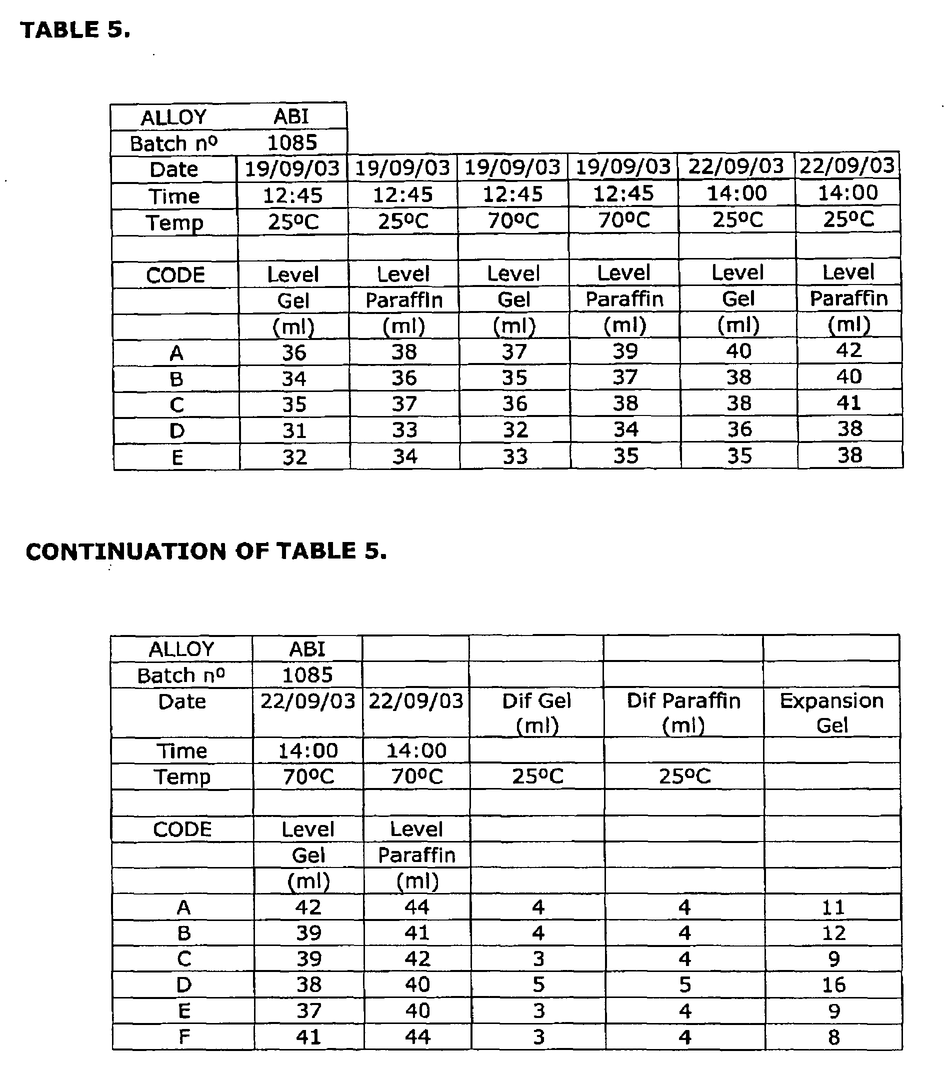

When the "PD-gas" test was carried out on this powder, the results in Table 6 were obtained.

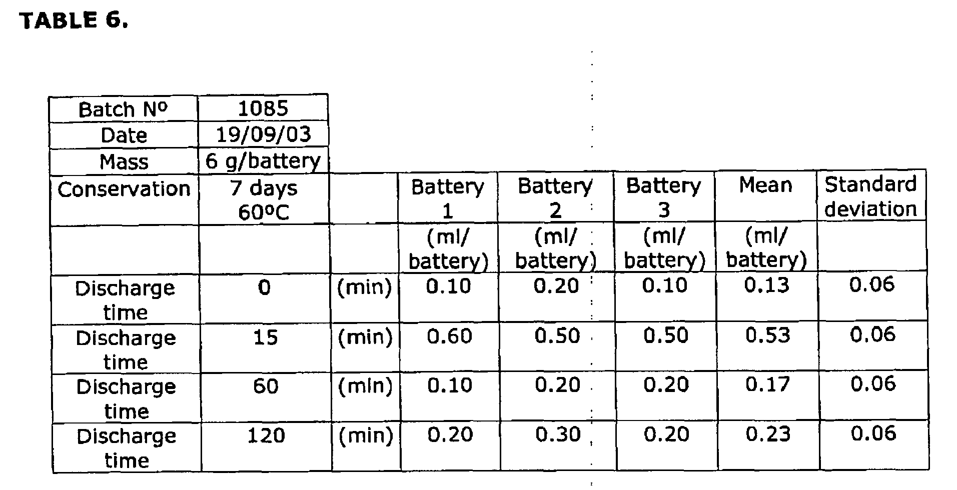

3rd example: The powders analysed are shown in Table 7, and were subjected to the expansion test according to US-A-5,464,709 and the "PD-gas" test on a battery with the format LR6.

**TABLE 7. BATCHES N° 1048, 1063 AND 1070.**

| Batch N° | Fe | Cu | Bi | In | Pb | Al |
|---|---|---|---|---|---|---|
| | (ppm) | (ppm) | (ppm) | (ppm) | (ppm) | (ppm) |
| 1048 | 1.1 | 1.8 | 296 | 291 | 13 | 0 |
| 1048 | 1.0 | 1.7 | 294 | 288 | 13 | 0 |
| | | | | | | |
| | | | | | | |
| 1063 | 1.6 | 2.1 | 197 | 186 | 47 | 55 |
| 1063 | 1.6 | 2.1 | 195 | 184 | 47 | 55 |
| | | | | | | |
| | | | | | | |
| 1070 | 1.6 | 1.9 | 217 | 198 | 52 | 78 |
| 1070 | 1.6 | 1.9 | 220 | 200 | 53 | 79 |

The results of the expansion of the gel and the "PD-gas" test are shown in Table 8. Some of the expansion tests were repeated in order to gain an idea of the repeatability of the test.

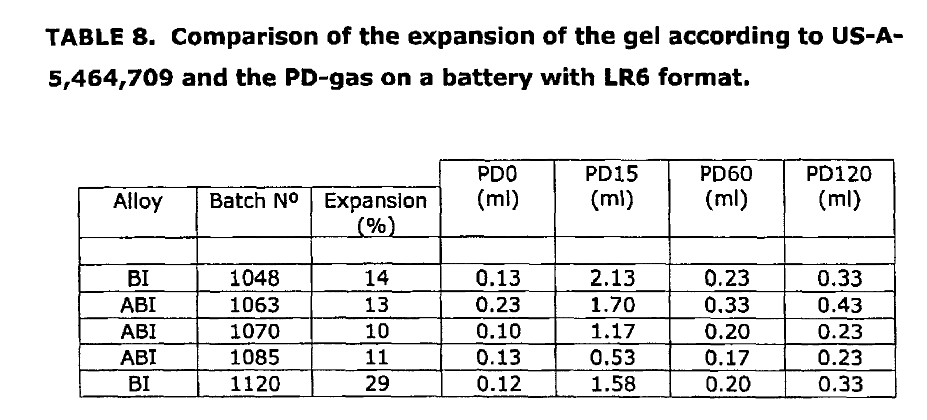

4^{th} example: The starting point is a zinc powder known as BI (P 1120), with a composition of micro-alloys of 300 ppm In and 300 ppm Bi.

A gel was prepared according to the formulation cited in US-A-5,464,709. 63 g Zn and 0.5 g Carbopol were mixed with 36.5 g of electrolyte, with a concentration of 37 % KOH containing 42.5 g/l of ZnO.

In a standardised manner, 18 g of this powder was injected into batteries of type LR14. These batteries were closed by means of industrial methods.

Four of these batteries were then discharged at constant intensity of 0.518 A for 120 minutes, another four of these batteries were discharged for 161 minutes, and a further four of these batteries were discharged for 200 minutes.

These batteries were then stored for 24 hours at 70 °C. The batteries were subsequently opened under water and the gas generated in their interior was measured.

The following was obtained:

| Discharge time (min) | Average gas generated (ml) | Standard deviation |
|---|---|---|
| 120 | 1.55 | 0.34 |
| 161 | 1.25 | 0.17 |
| 200 | 1.70 | 0.22 |

The discharge for 120 minutes with an intensity of 0.518 A is equivalent to a depth of discharge of 11 %. For 161 minutes, it is equivalent to a depth of discharge of 15 %, and for 200 minutes, it is equivalent to a depth of discharge of 19 %.

As it has been possible to see from other examples, the test of expansion of the powder P1120 according to US-A-5,464,709 gave expansion of the gel of more than 25 %.

Calculation shows that an expansion of 25 % is equivalent to the generation of gas in the interior of the closed element of approximately 1.2 ml, which concurs with the results previously provided.

6^{th} example: Two zinc powders were selected: one of these was ABI (P1361) and the other was BI (P1367).

Table 9 shows the analysis of the two powders, obtained in a standardised manner with the ICP.

**TABLE 9. Batches N° 1361 and 1376.**

| Batch N° | Fe | Cu | Bi | In | Pb | Al |
|---|---|---|---|---|---|---|
| | (ppm) | (ppm) | (ppm) | (ppm) | (ppm) | (ppm) |
| 1361 | 1.0 | 2.1 | 210 | 200 | 74 | 82 |
| 1361 | 1.0 | 2.1 | 210 | 199 | 74 | 81 |
| | | | | | | |
| 1376 | 0.7 | 2.2 | 294 | 279 | 19 | 0 |
| 1376 | 0.8 | 2.1 | 299 | 281 | 19 | 0 |

The results of the gas test outside the battery are shown in Table 10.

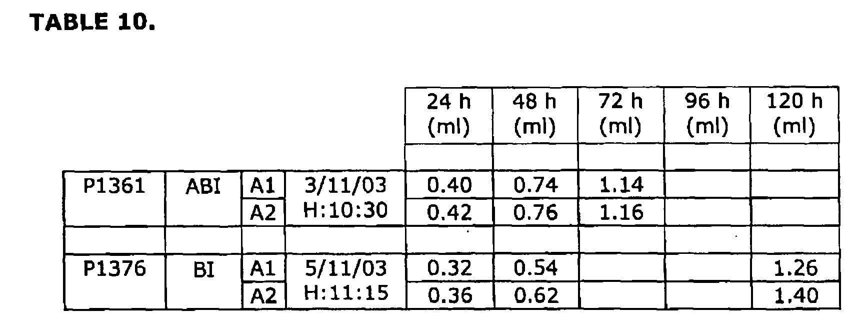

The results of the PD15-gas test on a battery in LR6 format after storage for 1 day at 60 °C are shown in Table 11.

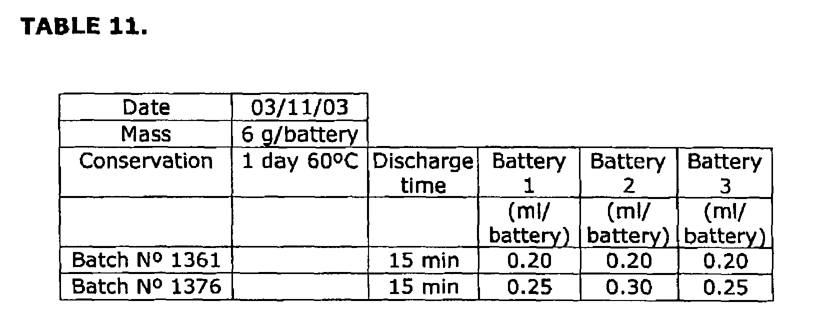

The results of the "PD-gas" test after storage for 7 days at 60 °C are shown in Table 12.

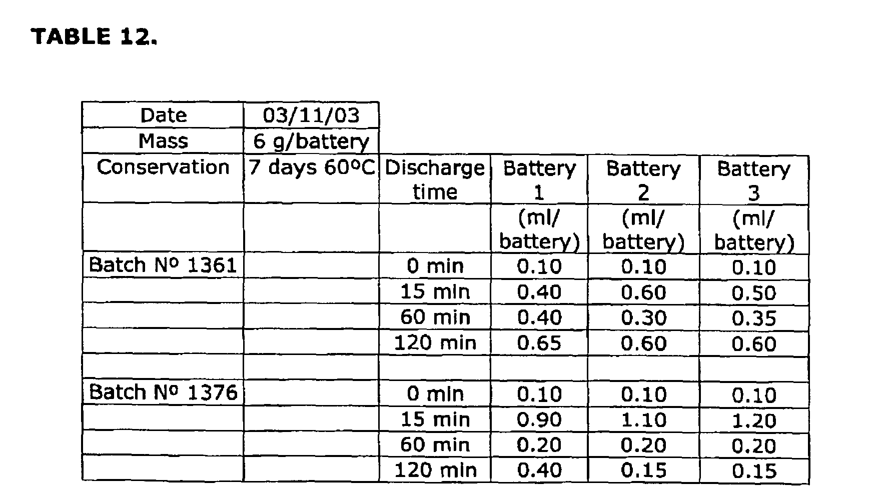

Two different tests were carried out, the first using the formula for the gel and the electrolyte provided in US-A-5,464,709, and the second using the formula for the gel provided in US-A-5,464,709 and the following formula for the electrolyte: 40% KOH with 44 g/l of ZnO. The results of the expansion test according to US-A-5,464,709 are shown in Tables 13 and 14.

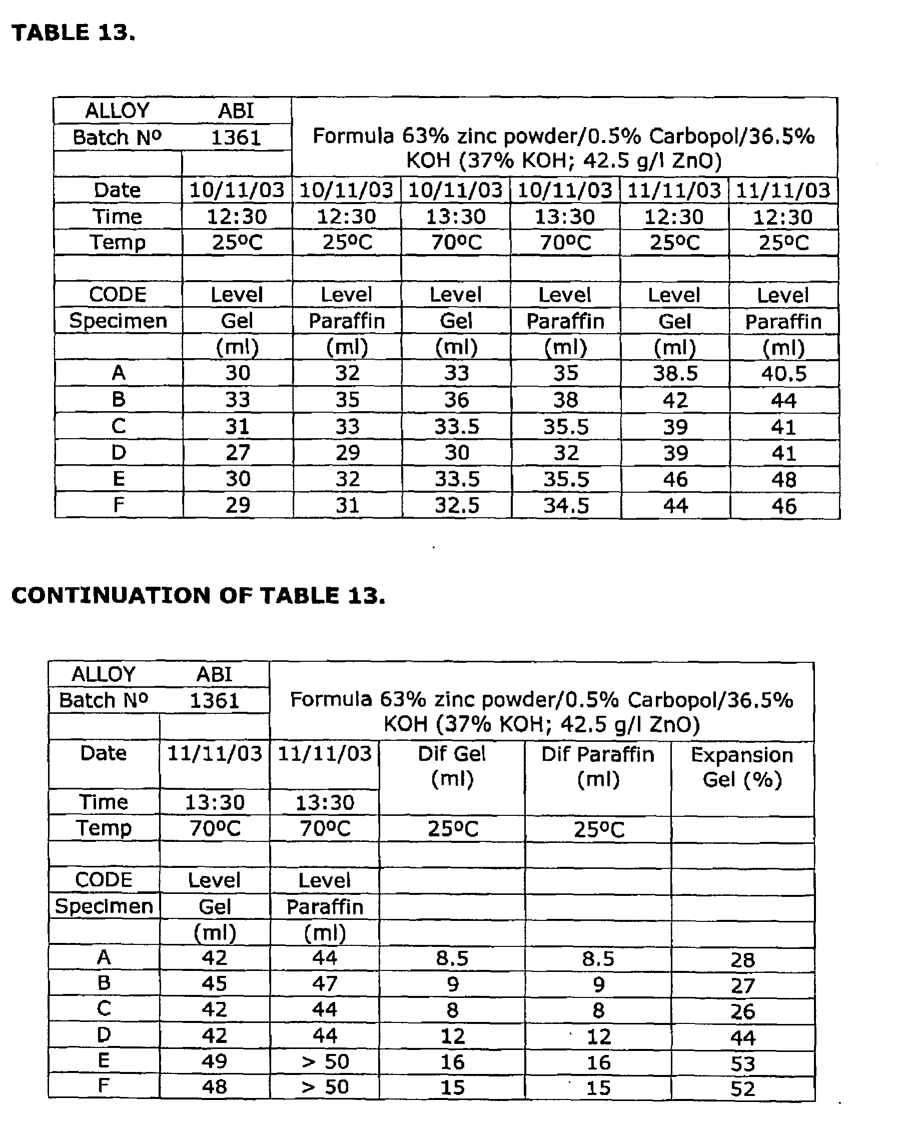

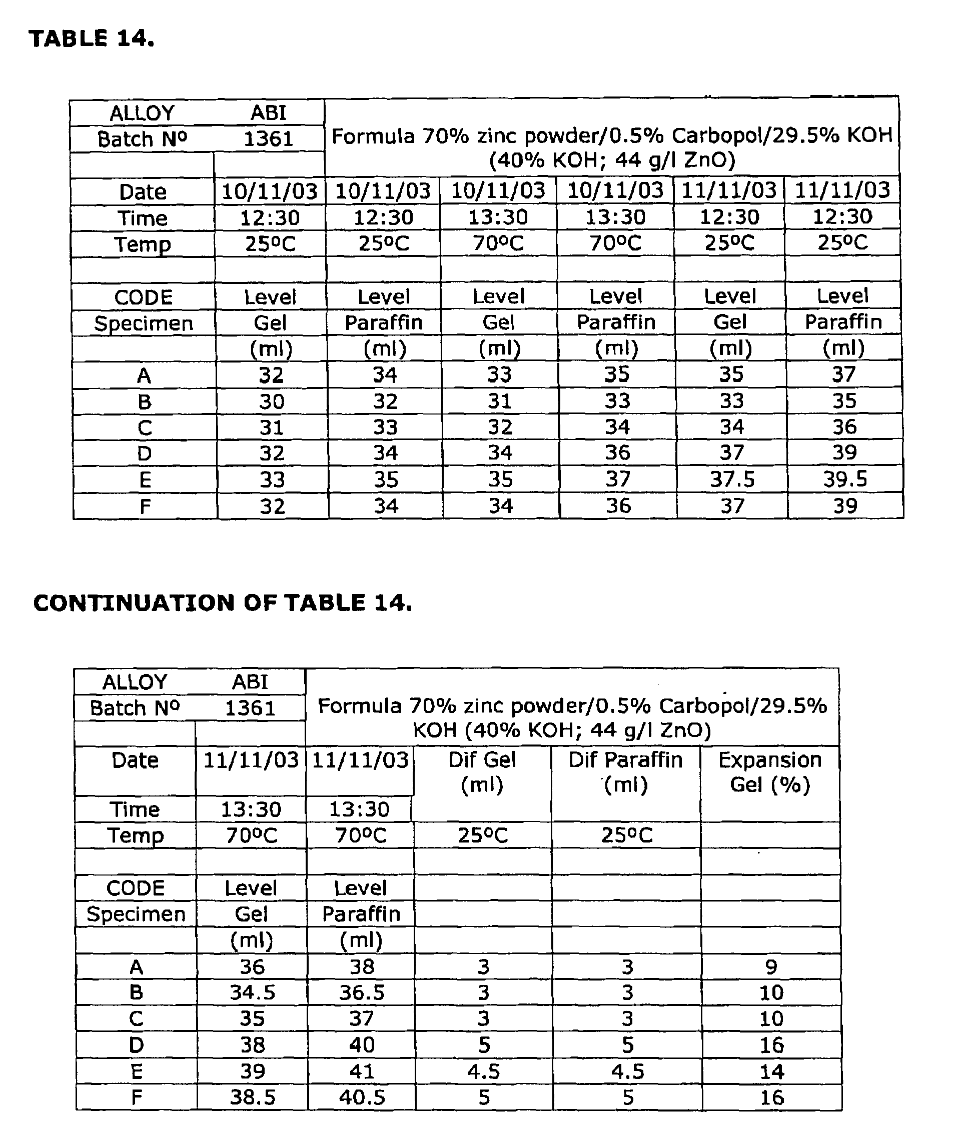

As will be appreciated from the examples, there is no relationship of proportionality between the "PD-gas" test on a battery with the format LR6 and the test of expansion of the gel according to US-A-5,464,709. In other words, as embodied by the present invention, powders which do not pass the expansion test according to US-A-5,464,709, because they have an expansion greater than 25 %, can have values of PD-gas which are within the stringent limits of the battery industry. In particular, such powders can provide values lower than 1.5 ml in the critical PD15 test for batteries with an LR6 format.

As also shown in the examples, zinc powders which have more than 25 % expansion according to the expansion test described in US-A-5,464,709 can have less than 25 % expansion after having been electrolysed for 166 minutes with a constant intensity of 2.88 A, when subjected to the expansion tests previously described, with use of a composition which is different from that disclosed in the above-mentioned patent, such as, for example 70 g Zn powder, 0.5 g Carbopol and 29.5 g electrolyte, which is 40 % by weight KOH and 43.9 g/l ZnO.

## Claims

1. An electrochemical element, preferably a battery, which contains an alkaline electrolyte, a cathode which contains manganese dioxide as an active cathodic material, and an anode which contains zinc powder as an active anodic material, **characterised in that**:
a) the zinc powder used complies with all of the regulations of content of mercury and cadmium, no mercury or cadmium has been added during its production, and consequently its mercury content is less than 0.1 parts per million and its cadmium content is less than 5 parts per million;
b) a gel prepared with the zinc powder according to the following formula: 63 g of zinc powder, 0.5 g of a thickening agent, such as Carbopol, 36.5 g of electrolyte (37 % KOH dissolved in water with 42.5 g/l of zinc oxide) has an expansion greater than 25 % measured after 24 hours at 70 °C after electrolysing 100 g of the gel at a constant intensity of 2.88 A for 161 minutes, which would correspond to a 15 % depth of discharge if the 100 g were discharged; and
c) gas of less than 2 ml is generated after 7 days' storage at 60 °C, when a battery with an LR6 format prepared with the zinc powder is subjected to 15 minutes' discharge in continuous conditions at 2.2 Ω.

2. An electrochemical element, preferably a battery, which contains an alkaline electrolyte, a cathode which contains manganese dioxide as an active cathodic material, and an anode which contains zinc powder as an active anodic material, **characterised in that**:
a) the zinc powder used complies with all of the regulations of content of mercury and cadmium, no mercury or cadmium has been added during its production, and consequently its mercury content is less than 0.1 parts per million and its cadmium content is less than 5 parts per million;
b) a gel prepared with the zinc powder according to the following formula: 63 g of zinc powder, 0.5 g of a thickening agent, such as Carbopol, 36.5 g of electrolyte (37 % KOH dissolved in water with 42.5 g/l of zinc oxide) has expansion greater than 25 % measured after 24 hours at 70 °C after electrolysing 100 g of the gel at a constant intensity of 2.88 A for 161 minutes, which would correspond to a 15 % depth of discharge if the 100 g were discharged; and
c) gas of less than 1.5 ml is generated after 7 days' storage at 60 °C, when a battery with an LR6 format prepared with the zinc powder is subjected to 15 minutes' discharge in continuous conditions at 2.2 Ω.

3. An electrochemical element, preferably a battery, which contains an alkaline electrolyte, a cathode which contains manganese dioxide as an active cathodic material, and an anode which contains zinc powder as an active anodic material, **characterised in that**:
a) the zinc powder used complies with all of the regulations of content of mercury and cadmium, no mercury or cadmium has been added during its production, and consequently its mercury content is less than 0.1 parts per million and its cadmium content is less than 5 parts per million;
b) a gel prepared with the zinc powder according to the following formula: 70 g of zinc powder, 0.5 g of a thickening agent, such as Carbopol, 29.5 g of electrolyte (40 % KOH dissolved in water with 43.9 g/l of zinc oxide) has an expansion of less than 25 % measured after 24 hours at 70 °C after electrolysing 100 g of the gel at a constant intensity of 2.88 A for 161 minutes, which would correspond to a 15 % depth of discharge if the 100 g were discharged; and
c) gas of less than 2 ml is generated after 7 days' storage at 60 °C, when a battery with an LR6 format prepared with the zinc powder is subjected to 15 minutes' discharge in continuous conditions at 2.2 Ω.

4. An electrochemical element, preferably a battery, which contains an alkaline electrolyte, a cathode which contains manganese dioxide as an active cathodic material, and an anode which contains zinc powder as an active anodic material, **characterised in that**:
a) the zinc powder used complies with all of the regulations of content of mercury and cadmium, no mercury or cadmium has been added during its production, and consequently its mercury content is less than 0.1 parts per million and its cadmium content is less than 5 parts per million;
b) a gel prepared with the zinc powder according to the following formula: 70 g of zinc powder, 0.5 g of a thickening agent, such as Carbopol, 29.5 g of electrolyte (40 % KOH dissolved in water with 43.9 g/l of zinc oxide) has an expansion of less than 25 % measured after 24 hours at 70 °C after electrolysing 100 g of the gel at a constant intensity of 2.88 A for 161 minutes, which would correspond to a 15 % depth of discharge if the 100 g were discharged; and
c) gas of less than 1.5 ml is generated after 7 days' storage at 60 °C, when a battery with an LR6 format prepared with the zinc powder is subjected to 15 minutes' discharge in continuous conditions at 2.2 Ω.

5. An electrochemical element, preferably a battery, comprising an alkaline electrolyte and an anode containing a zinc powder, preferably with no mercury or cadmium having been added during its production and its mercury content being less than 0.1 ppm and its cadmium content being less that 5 ppm, wherein the electrochemical element has a value in a specific expansion test which is higher than 25 %, and a gas value of less than 2 ml, after discharge and after 7 days' storage at 60 °C under specific discharge conditions, for a battery with an LR6 format.

6. An electrochemical element according to any of claims 1 to 5, wherein the content of alloyed elements consists of one or more from In, Bi, Al, alkaline-earth and alkaline elements, in the range between 15 and 1000 parts per million relative to the respective zinc content.

7. A test for characterizing electrochemical elements, preferably batteries, which contain an alkaline electrolyte, a cathode which contains manganese dioxide as an active cathodic material, and an anode which contains zinc powder as an active anodic material, preferably having a mercury content of less than 0.1 parts per million and a cadmium content of less than 5 parts per million, the test comprising the steps of:
a) preparing an electrochemical element with an LR6 format to include a gel according to the following formula: 63 g of zinc powder, 0.5 g of a thickening agent, such as Carbopol, 36.5 g of electrolyte (37 % KOH dissolved in water with 42.5 g/l of zinc oxide);
b) determining whether the gel has an expansion greater than 25 % measured after 24 hours at 70 °C after electrolysing 100 g of the gel at a constant intensity of 2.88 A for 161 minutes, which would correspond to a 15 % depth of discharge if the 100 g were discharged; and
c) determining whether gas in an amount of less than 2 ml, preferably less than 1.5 ml, is generated after 7 days' storage at 60 °C, when subjected to 15 minutes' discharge in continuous conditions at 2.2 Ω.

8. A test for characterizing electrochemical elements, preferably batteries, which contain an alkaline electrolyte, a cathode which contains manganese dioxide as an active cathodic material, and an anode which contains zinc powder as an active anodic material, preferably having a mercury content of less than 0.1 parts per million and a cadmium content of less than 5 parts per million, the test comprising the steps of:
a) preparing an electrochemical element with an LR6 format to include a gel according to the following formula: 70 g of zinc powder, 0.5 g of a thickening agent, such as Carbopol, 29.5 g of electrolyte (40 % KOH dissolved in water with 43.9 g/l of zinc oxide);
b) determining whether the gel has an expansion greater than 25 % measured after 24 hours at 70 °C after electrolysing 100 g of the gel at a constant intensity of 2.88 A for 161 minutes, which would correspond to a 15 % depth of discharge if the 100 g were discharged; and
c) determining whether gas in an amount of less than 2 ml, preferably less than 1.5 ml, is generated after 7 days' storage at 60 °C, when subjected to 15 minutes' discharge in continuous conditions at 2.2 Ω.
